# EUROPÄISCHE PATENTANMELDUNG

(11) **EP 4 249 769 A1**
(43) Veröffentlichungstag der Anmeldung: **27.09.2023**
(21) Anmeldenummer: 22020121.4
(22) Anmeldetag: 22.03.2022
(51) Int. Cl.: F16H 47/04, F16H 48/22, F16H 39/00, F16H 61/433, F16H 61/439, F16H 3/40, F16H 48/11, F16H 61/423, F16H 37/08

(54) **LEISTUNGSVERZWEIGTES GETRIEBE FÜR EIN KRAFTFAHRZEUG MIT EINER NIEDRIGEN BLINDLEISTUNG UND EINEM BREITEN GESCHWINDIGKEITSBEREICH**

(71) Anmelder: Fuss Spezialfahrzeugbau GmbH, 39218 Schönebeck (DE)
(72) Erfinder: BAUER, Josef, 85405 Nandlstadt (DE); FUSS, Sebastian, 84076 Pfeffenhausen (DE)
(74) Vertreter: Wittmann, Günther

(57) **Zusammenfassung**

Die Erfindung offenbart ein leistungsverzweigtes Getriebe, aufweisend:
- eine Getriebeantriebswelle, die mit einem Antriebsmotor gekoppelt werden kann,
- einem ersten Planetengetriebe, wobei die Getriebeantriebswelle mit den Achsen der Planetenräder (Z2) des ersten Planetengetriebes gekoppelt ist;
- einem ersten Hydrostat (H1), der vom Hohlrad (Z3) des ersten Planetengetriebes angetrieben wird;
- eine erste Doppelkupplung mit einem ersten Kupplungselement (KL) und einem zweiten Kupplungselement (KS), wobei das erste Kupplungselement (KL) und das zweite Kupplungselement (KS) den gleichen Kupplungskorb (Z7) aufweisen, wobei im Kupplungskorb (Z7) die mechanische Leistung des ersten Planetengetriebes und die hydraulische Leistung des zweiten Hydrostaten (H2) zusammengeführt werden;
- einem zweiten Hydrostat (H2), der mit dem ersten Hydrostat (H1) fluidmäßig verbunden ist, wobei der zweite Hydrostat (H2) mit einer Kupplungswelle und den Kupplungskorb (Z7) der ersten Doppelkupplung verbunden ist;
- ein erstes Zahnrad (Z15), das vom ersten Kupplungselement (KL) angetrieben wird und eine erste Zahnanzahl aufweist;
- ein zweites Zahnrad (Z15'), das vom zweiten Kupplungselement (KS) angetrieben wird und eine zweite Zahnanzahl aufweist, wobei die zweite Zahnanzahl höher als die erste Zahnanzahl ist;
- ein drittes Zahnrad (Z14), das mit dem ersten Zahnrad (Z15) kämmt und das eine dritte Zahnanzahl aufweist;
- ein viertes Zahnrad (Z14'), das mit dem zweiten Zahnrad (Z15') kämmt und das eine vierte Zahnanzahl aufweist, wobei die dritte Zahnanzahl kleiner als die vierte Zahnanzahl ist und wobei das dritte Zahnrad (Z14) und das vierte Zahnrad (Z14') an einer ersten Welle angeordnet sind;
- ein fünftes Zahnrad (Z17), das auf der ersten Welle angeordnet ist, wobei das fünfte Zahnrad eine Fahrzeugantriebswelle (VA, HA) antreibt;
- einer Steuerungseinrichtung, die dazu ausgebildet ist, den ersten Hydrostat (H1), den zweiten Hydrostat (H2), das erste Kupplungselement (KL) und das zweite Kupplungselement (KS) zu steuern.

## Beschreibung

### Technisches Gebiet

Die Erfindung betrifft ein leistungsverzweigtes Getriebe für ein Kraftfahrzeug, insbesondere für eine selbstfahrende Arbeitsmaschine, mit einer niedrigen Blindleistung und einem breiten Geschwindigkeitsbereich für das angetriebene Kraftfahrzeug.

### Gebiet der Erfindung

Ein leistungsverzweigtes Getriebe dient zur Leistungsübertragung über einen rein mechanischen und einen leistungsverzweigten Zweig. Damit eignen sie sich insbesondere selbstfahrende Arbeitsmaschinen, landwirtschaftliche Fahrzeuge, Radlader oder dergleichen, die einerseits unter hoher Last im Gelände anfahren können müssen und dennoch eine ausreichende Mindestgeschwindigkeit auf öffentlichen Straßen aufweisen sollen. Ein leistungsverzweigtes Getriebe umfasst eine Antriebswelle, welche zum Einspeisen eines Drehmoments mit einer Antriebsmaschine verbunden ist. Weiterhin umfasst das leistungsverzweigte Getriebe einen mechanischen ersten Zweig, der ein Planetengetriebe mit einem mit der Antriebswelle verbundenen Stegwelle, einem Hohlrad und einer Sonnenrad umfasst, auf der Planetenräder angeordnet sind, die mit dem Sonnenrad und mit dem Hohlrad kämmen. Weiterhin umfasst ein solches leistungsverzweigtes Getriebe einen stufenlos verstellbaren zweiten Zweig, der zumindest teilweise über die Planetengetriebeanordnung mit dem ersten Zweig verbunden ist und zwei oder mehr verstellbare hydraulische Energiewandler (schwenkbare Hydrostaten) umfasst, die miteinander hydraulisch koppelbar und jeweils in beide Richtungen entweder als Motor oder als Pumpe betreibbar sind. Schließlich umfasst ein derartiges leistungsverzweigtes Getriebe eine Abtriebswelle zum Antreiben des Fahrzeuges, auf die der erste Zweig und der zweite Zweig gekoppelt werden. Ein Arbeitsgerät kann über eine Zapfwelle angetrieben werden.

Dem Fachmann ist die Funktionsweise eines leistungsverzweigten Getriebes bekannt, so dass nicht weiter im Detail hierauf eingegangen werden muss.

### Stand der Technik

Die WO 2016/102572 A1 betrifft ein Leistungsverzweigtes Getriebe für ein Kraftfahrzeug. Das leistungsverzweigtes Getriebe umfasst eine Antriebswelle, welche zum Einspeisen von Drehmoment mit einer Brennkraftmaschine verbindbar ist, einen ersten mechanischen Zweig mit einer Planetengetriebeanordnung, einen stufenlos verstellbaren zweiten Zweig, der mit dem ersten Zweig verbindbar ist und zwei verstellbare Energiewandler umfasst, die miteinander energetisch koppelbar und jeweils in beide Richtungen betreibbar sind, sowie zumindest eine Abtriebswelle, welche über den ersten und den zweiten Zweig mit der Antriebswelle koppelbar ist. Zwischen der Antriebswelle und der Abtriebswelle ist zumindest eine erste Reversierstufe zum Wechseln zwischen zumindest einem ersten Vorwärtsfahrbereich und zumindest einem ersten Rückwärtsfahrbereich vorgesehen ist, wobei die Reversierstufe die Drehrichtungen der Sonnenräder, des Hohlrads und der Stegwelle beim Wechseln zwischen dem ersten Vorwärtsfahrbereich und dem ersten Rückwärtsfahrbereich entweder alle umkehrt oder alle konstant hält.

Die WO 2009/097701 A2 offenbart ein leistungsverzweigt leistungsverzweigtes Getriebe, insbesondere für Land- und Baufahrzeuge, umfasst wenigstens zwei Hydrostaten, welche hydraulisch untereinander in Verbindung stehen und als Pumpe bzw. als Motor arbeiten, wobei wenigstens einer der Hydrostaten mittels einer Steuerung verstellt bzw. verschwenkt werden kann, mechanische Kopplungsmittel, welche die Hydrostaten mit einer inneren Antriebswelle und einer inneren Abtriebswelle koppeln, ein einen Deckel und ein Gehäuseunterteil umfassendes Gehäuse, wobei die Hydrostaten, die inneren Antriebs- und Abtriebswellen und die mechanischen Kopplungsmittel auf der Unterseite des Deckels angeordnet und befestigt sind, und im Gehäuseunterteil eine von außen zugängliche äußere Antriebswelle und Abtriebswelle gelagert sind, welche bei zusammengebautem Gehäuse mit der inneren Antriebswelle bzw. Abtriebswelle in Wirkverbindung stehen. Bei einem solchen Getriebe wird ein kompakter Aufbau bei leichter Zugänglichkeit und großer Flexibilität bei der Anpassung an unterschiedliche Fahrzeuge dadurch erreicht, dass die zur Verstellung bzw. Verschwenkung des wenigstens einen Hydrostaten auf der Oberseite des Deckels angeordnet ist und durch den Deckel hindurch auf den wenigstens einen Hydrostaten einwirkt.

Die DE 10 2008 008 234 A1 betrifft eine Verstelleinheit für ein stufenloses leistungsverzweigt verzweigtes Getriebe, welches Getriebe zwei Hydrostaten umfasst, die mit Abstand nebeneinander angeordnet und jeweils um eine Schwenkachse verschwenkbar gelagert sind. Insbesondere ein kompakter Aufbau wird dadurch erreicht, dass die Verstelleinheit hydraulisch betätigbare Verstellmittel zum Verschwenken der Hydrostaten um ihre Schwenkachsen umfasst, dass Steuerventile zum Steuern der hydraulisch betätigbaren Verstellmittel und Betätigungsmittel zum Betätigen der Steuerventile vorgesehen sind und dass die Steuerventile und die Betätigungsmittel zwischen den beiden Hydrostaten angeordnet sind.

Leistungsverzweigte Getriebe des Standes der Technik, weisen den Nachteil auf, dass Sie eine Arbeitsmaschine lediglich in einem vergleichsweise kleinen Geschwindigkeitsbereich antreiben können und dennoch eine vergleichsweise hohe Verlustleistung aufweisen.

### Allgemeine Beschreibung der Erfindung

Die vorliegende Erfindung stellt sich zur Aufgabe, ein leistungsverzweigtes Getriebe zu schaffen, das eine Arbeitsmaschine in einem vergleichsweise großen Geschwindigkeitsbereich antreiben kann.

Die Aufgabe der Erfindung wird durch ein leistungsverzweigtes Getriebe nach Anspruch 1 gelöst. Die Unteransprüche beanspruchen bevorzugte Ausführungsformen.

Die Erfindung offenbart ein leistungsverzweigtes Getriebe mit einer Getriebeantriebswelle, die mit einem Antriebsmotor gekoppelt werden kann und einem ersten Planetengetriebe, wobei die Getriebeantriebswelle mit den Achsen der Planetenräder gekoppelt ist. Das erfindungsgemäße leistungsverzweigte Getriebe umfasst einen ersten Hydrostat, der vom Hohlrad des ersten Planetengetriebes angetrieben wird. Ferner umfasst das erfindungsgemäße leistungsverzweigte Getriebe eine erste Doppelkupplung mit einem ersten Kupplungselement und einem zweiten Kupplungselement, wobei das erste Kupplungselement und das zweite Kupplungselement den gleichen Kupplungskorb aufweisen und wobei der Kupplungskorb von dem Sonnenrad des ersten Planetengetriebes angetrieben wird. Das erfindungsgemäße leistungsverzweigte Getriebe umfasst einen zweiten Hydrostat, der mit dem ersten Hydrostat fluidmäßig (hydraulisch) verbunden ist, wobei der zweite Hydrostat mit einer Kupplungswelle und den Kupplungskorb (Z7) der ersten Doppelkupplung verbunden ist. Die Eingänge und Ausgänge des ersten Hydrostat und des zweiten Hydrostat können mittels einer Ringleitung verbunden sein. Im Kupplungskorb können die mechanische Leistung des ersten Planetengetriebes und die hydraulische Leistung des zweiten Hydrostaten zusammengeführt werden.

Das erfindungsgemäße leistungsverzweigte Getriebe umfasst ein erstes Zahnrad, das vom ersten Kupplungselement angetrieben wird und eine erste Zahnanzahl aufweist und ein zweites Zahnrad, das vom zweiten Kupplungselement angetrieben wird und eine zweite Zahnanzahl aufweist, wobei die zweite Zahnanzahl höher als die erste Zahnanzahl ist. Ein drittes Zahnrad kämmt mit dem ersten Zahnrad und weist eine dritte Zahnanzahl auf, und ein viertes Zahnrad kämmt mit dem zweiten Zahnrad und weist eine vierte Zahnanzahl auf, wobei das dritte Zahnrad und das vierte Zahnrad an einer ersten Welle angeordnet sind und die vierte Zahnanzahl kleiner als die dritte Zahnanzahl ist. Je nachdem welches Kupplungselement der ersten Doppelkupplung geschlossen ist, wird die erste Welle mit einer niedrigeren oder höheren Drehzahl beaufschlagt.

Das erfindungsgemäße leistungsverzweigte Getriebe umfasst ein fünftes Zahnrad, das auf der ersten Welle angeordnet ist, wobei das fünfte Zahnrad eine Fahrzeugantriebswelle antreibt, die ihrerseits ein Fahrzeug (eine Arbeitsmaschine) antreibt.

Schließlich umfasst das erfindungsgemäße Getriebe eine Steuerungseinrichtung, die dazu ausgebildet ist, den ersten Hydrostat, den zweiten Hydrostat, das erste Kupplungselement und das zweite Kupplungselement zu steuern. Die Steuerungseinrichtung kann eine verteilte Steuerungseinrichtung sein, die lediglich elektrische Komponenten, lediglich hydraulische Komponenten und sowohl elektrische Komponenten als auch hydraulische Komponenten umfassen kann. Dem Fachmann sind die Funktionsweise einer Steuerungseinrichtung für ein leistungsverzweigtes Getriebe bekannt, so dass auf die Details nicht eingegangen werden muss.

Das erfindungsgemäße leistungsverzweigte Getriebe weist keine Blindleistung bis eine niedrige Blindleistung auf.

Die erste Doppelkupplung kann eine Lamellendoppelkupplung sein. Die Arbeitsweise einer Lamellenkupplung und einer Lamellendoppelkupplung sind dem Fachmann bekannt und müssen hierin nicht weiter erläutert werden.

Ein weiterer Vorteil der Erfindung ist, dass das leistungsverzweigte Getriebe ein Fahrzeug über einen weiten Geschwindigkeitsbereich angetrieben werden kann, da die Leistung des zweiten Hydrostaten über die Lamellendoppelkupplung auf Zahnräderpaare mit einer unterschiedlichen Untersetzung bzw. Übersetzung übertragen werden kann. Das erste Zahnradpaar aus dem ersten Zahnrad und dem dritten Zahnrad weist eine andere Übersetzung bzw. Untersetzung als das zweite Zahnradpaar auf, das aus dem zweiten Zahnrad und dem vierten Zahnrad gebildet wird. Je nachdem welches Kupplungselement der ersten Doppelkupplung schließt, wird entweder das erste Zahnradpaar (die erste Übersetzung bzw. die erste Untersetzung) oder das zweite Zahnradpaar (die zweite Übersetzung bzw. die zweite Unterbesetzung) zum Antrieb des Kraftfahrzeuges verwendet.

Die Steuerungseinrichtung kann bei einem ersten Fahrmodus dazu ausgebildet sein den ersten Hydrostat in einem Bereich von 0° bis 45° zu schwenken, so dass er als Pumpe wirkt, und den zweiten Hydrostat von 45° bis 0° zu schwenken, so dass er als Motor wirkt. Die Steuerungseinrichtung ist dazu ausgebildet, das erste Kupplungselement zu schließen und das zweite Kupplungselement zu öffnen. Falls eine niedrige Drehzahl auf die Fahrzeugantriebswelle abgegeben werden soll, schwenkt die Steuerungseinrichtung den ersten Hydrostat auf 0° und den zweiten Hydrostat auf 45°. Falls eine hohe Drehzahl auf die Fahrzeugantriebswelle abgegeben werden soll, schwenkt die Steuerungseinrichtung den ersten Hydrostat auf 45° und den zweiten Hydrostat auf 0°.

Die Steuerungseinrichtung kann in einem zweiten Fahrmodus dazu ausgebildet sein, den ersten Hydrostat in einem Bereich von einem ersten Zwischenwert, der höher als 33° und niedriger als 35° ist bis 45° zu schwenken, so dass er als Pumpe wirkt, und den zweiten Hydrostat von einem zweiten Zwischenwert der höher als 39° und niedriger als 41° ist, bis 0° zu schwenken, so dass er als Motor wirkt. Die Steuerungseinrichtung ist in diesem Betriebsmodus dazu ausgebildet, das zweite Kupplungselement zu schließen und das erste Kupplungselement zu öffnen. Falls eine niedrige Drehzahl auf die Fahrzeugantriebswelle abgegeben werden soll, ist die Steuerungseinrichtung in dem zweiten Fahrmodus dazu ausgebildet, den ersten Hydrostat auf einem ersten Zwischenwert zu schwenken und den zweiten Hydrostat auf den zweiten Zwischenwert zu schwenken. Falls eine hohe Drehzahl an die Fahrzeugantriebswelle abgegeben werden soll, ist die Steuerungseinrichtung dazu ausgebildet, den ersten Hydrostat auf 45° zu schwenken und den zweiten Hydrostat auf 0° zu schwenken. Im zweiten Fahrmodus gibt das leistungsverzweigte Getriebe eine höhere Drehzahl an die Fahrzeugantriebswelle ab als im ersten Betriebsmodus.

Die Doppelkupplung, die durch den zweiten Hydrostaten und das Sonnenrad angetrieben wird und die wahlweise das Drehmoment auf das erste Zahnradpaar oder auf das zweite Zahnradpaar überträgt bewirkt, dass an die Fahrzeugantriebswelle ein Drehmoment in einem breiten Drehzahlbereich abgegeben werden kann und, zugleich wird die Verlustleistung reduziert.

Bei einer schnellen Fahrt mit einer reduzierten Drehzahl der Antriebsmaschine kann die Steuerungseinrichtung den zweiten Hydrostat auf einen dritten Zwischenwert schwenken, der zwischen 0° und zwischen 0° und -8°, vorzugsweise zwischen -2° und -5° liegt. In diesen dritten Fahrmodus kann die Betriebsdrehzahl der Antriebsmaschine um etwa 50% bis 60% abgesenkt werden, die Blindleistung beträgt dann etwa 60% bis 70% der dabei von der Arbeitsmaschine abgegebenen Leistung.

Beim Umschalten vom ersten Fahrmodus zum zweiten Fahrmodus kann die Steuerungseinrichtung dazu ausgebildet sein, den ersten Hydrostat auf einen Bereich von etwa 30° bis etwa 38°, bevorzugt auf einen Bereich von etwa 32° bis 36°, mehr bevorzugt auf einen Bereich von etwa 28° bis 32° zu schwenken und den zweiten Hydrostat auf einen Bereich von etwa 37° bis 43°, bevorzugt auf einen Bereich von etwa 39° bis 41° zu schwenken und gleichzeitig das erste Kupplungselement zu öffnen und das zweite Kupplungselement zu schließen. Anschließend schwenkt die Steuerungseinrichtung den ersten Hydrostat auf 45° und den zweiten Hydrostat auf 0°. Dadurch wird ein ruckfreier Übergang vom ersten Fahrmodus zum zweiten Fahrmodus sichergestellt.

Falls kein Drehmoment über das leistungsverzweigte Getriebe von der Antriebsmaschine an die Fahrzeugantriebswelle übertragen werden soll, schwenkt die Steuerungseinrichtung den ersten Hydrostat auf 0° und den zweiten Hydrostat auf 45°. Ferner schließt die Steuerungseinrichtung das erste Kupplungselement. Dadurch wird die Fahrzeugantriebswelle blockiert.

Das leistungsverzweigte Getriebe kann ferner ein Reversiergetriebe aufweisen, das vom Sonnenrad des ersten Planetengetriebes angetrieben wird und das den Kupplungskorb der ersten Doppelkupplung antreibt. Dadurch kann die Drehrichtung der Fahrzeugantriebswelle geändert werden, ohne dass der Wirkungsgrad des leistungsverzweigten Getriebes reduziert wird.

Das Reversiergetriebe kann eine zweite Doppelkupplung mit einem dritten Kupplungselement und einem vierten Kupplungselement aufweisen. Das Reversiergetriebe treibt in einer geschlossenen Stellung des dritten Kupplungselementes und in einer offenen Stellung des vierten Kupplungselementes den Kupplungskorb der ersten Doppelkupplung in einer ersten Richtung an. In einer offenen Stellung des dritten Kupplungselementes und in einer geschlossenen Stellung des vierten Kupplungselementes treibt das Reversiergetriebe den Kupplungskorb der ersten Doppelkupplung in einer zweiten Richtung an. Die Steuerungseinrichtung ist dazu ausgebildet das dritte Kupplungselement und das vierte Kupplungselement zu steuern.

Das dritte Kupplungselement und das vierte Kupplungselement können je eine Klauenkupplung sein.

Bei einer Vorwärtsfahrt kann die Steuerungseinrichtung das dritte Kupplungselement schließen und das vierte Kupplungselement öffnen. Die Hydrostaten werden je nach gewünschten Fahrmodus so geschwenkt, wie zuvor beschrieben wurde.

Die Steuerungseinrichtung kann in einem ersten Fahrmodus bei Rückwärtsfahrt dazu ausgebildet sein, den ersten Hydrostat in einem Bereich von 0° bis -45° zu schwenken, so dass er als Pumpe wirkt, und den zweiten Hydrostat von 45° bis 0° zu schwenken, so dass er als Motor wirkt. Die Steuerungseinrichtung schließt das erste Kupplungselement, öffnet das zweite Kupplungselement, öffnet das dritte Kupplungselement und schließt das vierte Kupplungselement. Falls eine niedrige Drehzahl auf die Fahrzeugantriebswelle abgegeben werden soll, schwenkt die Steuerungseinrichtung den ersten Hydrostat auf 0° und den zweiten Hydrostat auf 45°. Falls eine hohe Drehzahl auf die Fahrzeugantriebswelle abgegeben werden soll, schwenkt die Steuerungseinrichtung den ersten Hydrostat auf -45° und den zweiten Hydrostat auf 0°. Dieser Fahrmodus bewirkt eine langsame Fahrt in Rückwärtsrichtung.

Die Steuerungseinrichtung kann in einem zweiten Fahrmodus in Rückwärtsrichtung dazu ausgebildet sein, den ersten Hydrostat in einem Bereich von einem ersten Zwischenwert, der höher als -35° und niedriger als -33° ist bis -45° zu schwenken, so dass er als Pumpe wirkt, und den zweiten Hydrostat von einem zweiten Zwischenwert der höher als 39° und niedriger als 41° ist, bis 0° zu schwenken, so dass er als Motor wirkt. Die Steuerungseinrichtung schließt das zweite Kupplungselement und öffnet das erste Kupplungselement, schließt das vierte Kupplungselement und öffnet das dritte Kupplungselement. Falls eine niedrige Drehzahl auf die Antriebswelle abgegeben werden soll, schwenkt die Steuerungseinrichtung den ersten Hydrostat auf den dritten Zwischenwert und schwenkt den zweiten Hydrostat auf den vierten Zwischenwert. Falls eine hohe Drehzahl auf die Fahrzeugantriebswelle abgegeben werden soll, schwenkt die Steuerungseinrichtung den ersten Hydrostat auf -45° und schwenkt den zweiten Hydrostat auf 0°. Dieser Fahrmodus bewirkt eine schnelle Fahrt in Rückwärtsrichtung.

Die Erfindung offenbart auch ein leistungsverzweigtes Getriebe mit einer Verstelleinrichtung, die dazu ausgebildet ist, ein Gehäuse des ersten Hydrostat oder des zweiten Hydrostat zu drehen. Die Verstelleinrichtung umfasst einen drehbar gelagerten Schwenkhebel, der mit dem Gehäuse des ersten Hydrostat oder mit dem Gehäuse des zweiten Hydrostat gekoppelt ist und der dazu ausgebildet ist, das Gehäuse des ersten Hydrostat oder das Gehäuse des zweiten Hydrostat um einen Drehpunkt des Schwenkhebels zu drehen. Die Verstelleinrichtung umfasst ferner einen ersten Stellkolben, der an einer ersten Seite des Schwenkhebels drehbar gelagert ist, und einen zweiten Stellkolben, der an einer zweiten Seite des Schwenkhebels drehbar gelagert ist, wobei die zweite Seite der ersten Seite entgegengesetzt ist und wobei zwischen der ersten Seite und der zweiten Seite des Schwenkhebels der Drehpunkt des Schwenkhebels angeordnet ist. Die Verstelleinrichtung umfasst ferner einen ersten Zylinder, in dem der erste Stellkolben angeordnet ist, und einen zweiten Zylinder, in dem der zweite Stellkolben angeordnet ist. Die Verstelleinrichtung umfasst eine erste Hydraulikleitung, die mit dem ersten Zylinder gekoppelt ist, um Hydrauliköl dem ersten Zylinder zuzuführen oder von dort abzuführen. Die Verstelleinrichtung umfasst ferner eine zweite Hydraulikleitung, die mit dem zweiten Zylinder gekoppelt ist, um Hydrauliköl dem zweiten Zylinder zuzuführen oder von dort abzuführen. Die Verstelleinrichtung umfasst eine Stelleinheit mit einem Aktor, wobei die Steuerungseinrichtung dazu ausgebildet ist, den Aktor so zu betätigen, dass der Aktor bewirkt, dass Hydrauliköl der ersten Hydraulikleitung und/oder der zweiten Hydraulikleitung zugeführt wird oder von dort abgeführt wird.

Bei einer bevorzugten Ausführungsform ist jeder Hydrostat mit einer Verstelleinrichtung gekoppelt.

Durch die Verwendung von zwei unabhängigen Verstelleinrichtung anstelle einer Verstellwalze ist es möglich, die Schwenkwinkel der beiden Hydrostaten zueinander laufend den Betriebsverhältnissen des Getriebes anzupassen. Mit anderen Worten, im Teillastbereich können die Hydrostaten so geschwenkt werden, dass der Volumenstrom durch diese reduziert und somit der Wirkungsgrad des leistungsverzweigten Getriebes erhöht wird. Die Anmelderin behält sich vor, auf den Aspekt der Verstelleinrichtung separat Schutz zu ersuchen, beispielsweise mittels einer Teilanmeldung.

Die Verstelleinrichtung umfasst einen Stellhebel, der am Aktor drehbar gelagert ist. Die Verstelleinrichtung umfasst ferner einen Steuerschieber, der am Stellhebel drehbar gelagert ist. Der Steuerschieber ist dazu ausgebildet, die erste Hydraulikleitung und oder die zweite Hydraulikleitung zu öffnen oder zu schließen, damit Hydrauliköl in die erste Hydraulikleitung und/oder in die zweite Hydraulikleitung geleitet werden kann oder von dort abgeführt werden kann. Der Stellhebel ist am Schwenkhebel drehbar gelagert.

Die Schalteinheit überträgt die von der Steuerungseinrichtung vorgegebenen Schwenkwinkel für den ersten Hydrostat und den zweiten Hydrostat auf den jeweiligen Stellhebel. Dadurch wird der jeweilige Steuerschieber ausgelenkt und Hydraulikflüssigkeit wird durch Hydraulikleitungen zu dem jeweiligen Stellkolben geleitet. Das vom jeweils anderen Stellkolben, der am gleichen Schwenkhebel angeordnet ist, verdrängte Hydrauliköl wird über die jeweils andere Hydraulikleitung zurück in einen Tank geleitet. Dadurch wird das mit den Schwenkhebel gekoppelte Gehäuse des jeweiligen Hydrostat verstellt.

Die Stellkolben werden gleichzeitig durch den als Waage arbeitenden Stellhebel über den Schwenkhebel wieder in ihre Neutralstellung gebracht. Hat der Hydrostat den vorgegebenen Schwenkwinkel erreicht, schließt der Steuerschieber die erste Hydraulikleitung und die zweite Hydraulikleitung. Der Hydrostat wird durch die Hydraulikflüssigkeit, die durch eine negative Schaltüberdeckung von Steuerkanten von den Steuerkolben, die auf beide Zylinder wirkt, in der gewünschten Position gehalten. Zum Schwenken in die andere Richtung wird der Steuerschieber in die entgegengesetzte Richtung ausgelenkt und der Schwenkwinkel wird in die andere Richtung bewegt.

In der 0°-Stellung (Neutralstellung) des Schwenkhebels, in der der erste Stellkolben und der zweite Stellkolben gleichweit ausgelenkt sind, kann sich eine Lagerung des Schwenkhebels oberhalb des Drehpunktes des Stellhebels befinden. Die Lagerung des ersten Stellkolbens am Stellhebel und die Lagerung des zweiten Stellkolbens am Stellhebel ist symmetrisch zum Drehpunkt des Stellhebels angeordnet. Der Aktor wird durch die Stelleinrichtung longitudinal bewegt, wodurch der Stellhebel geschwenkt wird.

Die Lagerung des Schwenkhebels in der Verstelleinrichtung ist so konstruiert, dass keine Biegemomente auf das Schwenkgehäuse des Hydrostat übertragen werden und die Gehäuse des Hydrostat nicht verformt werden. So wird erreicht, dass die Dichtspalte zwischen dem Schwenkgehäuse und einer Lagerbrücke sehr klein gehalten werden kann und eine Dichtung nicht durch die unter einem hohen Druck stehende Flüssigkeit in den Dichtspalten gepresst und zerstört wird.

Die Erfindung offenbart auch ein Fahrzeug mit einer Antriebsmaschine, die mit dem zuvor beschriebenen leistungsverzweigten Getriebe gekoppelt ist. Das leistungsverzweigte Getriebe treibt die Antriebsräder des Fahrzeuges an.

### Kurze Beschreibung der Figuren

Anschließend werden die Figuren detaillierter beschrieben, die exemplarische und nicht beschränkende Ausführungsformen der Erfindung zeigen, wobei:
Figur 1a eine schematische Darstellung des erfindungsgemäßen leistungsverzweigten Getriebes zeigt;
Figur 1b eine Schnittansicht des erfindungsgemäßen leistungsverzweigten Getriebes zeigt;
Figuren 2a bis 2c die Stellung der Hydrostaten, der ersten Doppelkupplung und der zweiten Doppelkupplung bei langsamer Vorwärtsfahrt zeigen;
Figuren 3a bis 3c die Stellung der beiden Hydrostaten, der ersten Doppelkupplung und der zweiten Doppelkupplung bei schneller Vorwärtsfahrt zeigen;
Figuren 4a bis 4c die Stellung der Hydrostaten, der ersten Doppelkupplung und der zweiten Doppelkupplung bei langsamer Rückwärtsfahrt zeigen;
Figuren 5a bis 5c die Stellung der beiden Hydrostaten, der ersten Doppelkupplung und der zweiten Doppelkupplung bei schneller Rückwärtsfahrt zeigen;
Figuren 6a bis 6c die Stellung der beiden Hydrostaten bei schneller Vorwärtsfahrt mit abgesenkter Drehzahl der Antriebsmaschine zeigen;
Figuren 7a bis 7c die Stellung der Hydrostaten bei schneller Rückwärtsfahrt mit abgesenkter Drehzahl der Antriebsmaschine zeigen;
Figuren 8a bis 8c und Figuren 8b' und 8c' einen schematischen Schnitt durch eine erfindungsgemäße Verstelleinrichtung für einen Hydrostat zeigen; und
Figur 9 eine teilweise weggeschnittene perspektivische Ansicht der erfindungsgemäßen Verstelleinrichtung zeigt.

### Ausführliche Beschreibung der Erfindung

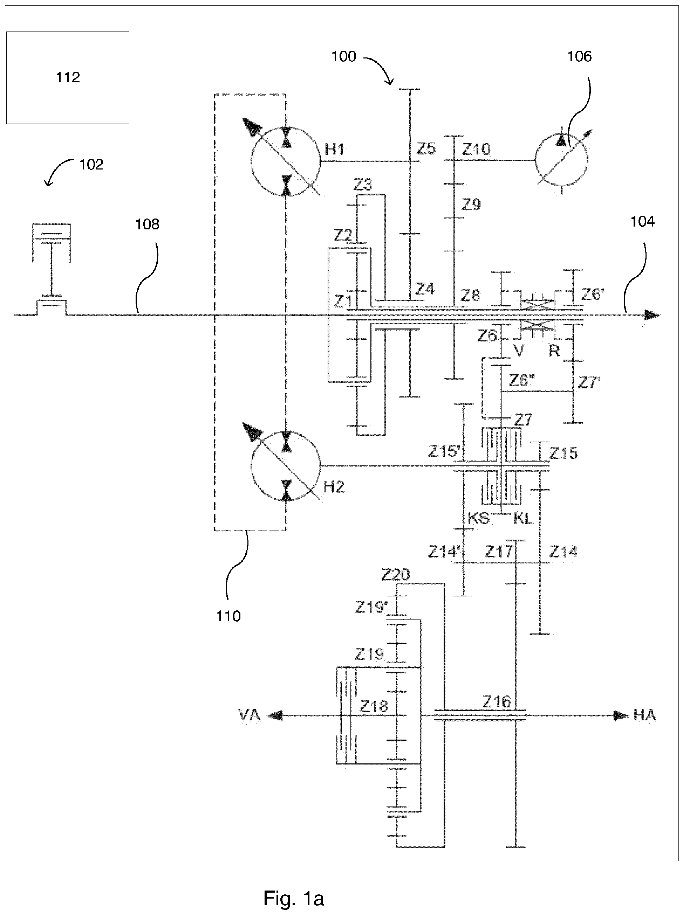

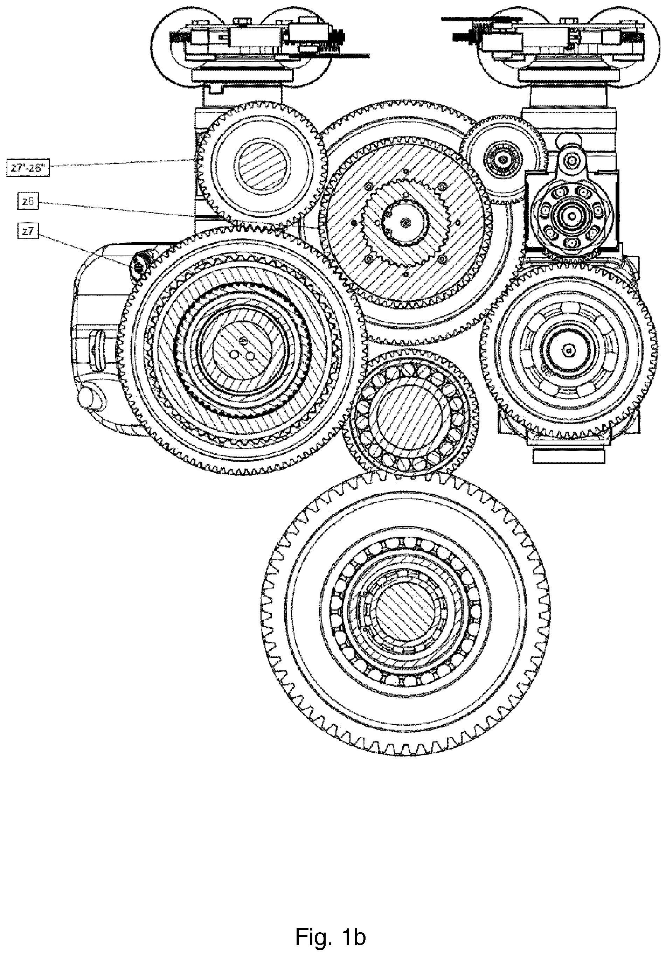

Es wird auf Figur 1a Bezug genommen, die eine schematische Darstellung des erfindungsgemäßen leistungsverzweigten Getriebes bzw. hydrostatischen Getriebes zeigt, und Figur 1b Bezug genommen, die eine Schnittansicht des erfindungsgemäßen leistungsverzweigten Getriebes zeigt. Eine Antriebsmaschine 102 treibt eine Getriebeantriebswelle 108 an. Die Getriebeantriebswelle ist mit den Achsen der Planetenräder Z2 des ersten Planetengetriebes gekoppelt. Vom Hohlrad Z3 wird der erste Hydrostat mittels eines mit dem Hohlrad Z3 gekoppelten Zahnrades Z4 und einem mit dem ersten Hydrostat gekoppelten Zahnrades Z5 angetrieben. Ein Steg treibt über Zahnräder Z8, Z9 und Z10 eine Hydraulikpumpe 106 an, die beispielsweise Druck zum Verstellen des ersten Hydrostat des H1 und eines zweiten Hydrostat des H2 liefern kann. Der erste Hydrostat H1 und der zweite Hydrostat H2 sind über eine Ringleitung 110 hydraulisch miteinander gekoppelt.

Die Getriebeantriebswelle 108 wird als Zapfwelle 104 für ein Aggregat, beispielsweise ein landwirtschaftliches Aggregat aus dem Getriebe 100 herausgeführt.

Die Hohlwelle Z1 eines Sonnenrades des ersten Planetengetriebes ist mit einer Welle oder Hohlwelle einer zweiten Doppelkupplung V, R mit einem dritten Kupplungselement V und einem vierten Kupplungselement R gekoppelt. Das dritte Kupplungselement V und das vierte Kupplungselement R können als Klauenkupplung ausgebildet sein. Am Kupplungskorb des dritten Kupplungselementes V ist ein Zahnrad Z6 angeordnet, und am vierten Kupplungselementes R ist ein Zahnrad Z6' angeordnet. Ein Zahnrad Z7', mit dem das Zahnrad Z6' kämmt, ist auf einer gleichen Welle angeordnet wie ein Zahnrad Z6", das mit dem Zahnrad Z7 kämmt. Das Zahnrad Z6 und das Zahnrad Z6" kämmen mit dem Zahnrad Z7.

Die zweite Doppelkupplung und die Zahnräder Z6, Z6', Z6", Z7 und Z7' arbeiten als Reversiergetriebe. Falls das dritte Kupplungselement V geschlossen ist und das vierte Kupplungselement R geöffnet ist, treibt das Zahnrad Z6 über Z7 einen Kupplungskorb der ersten Doppelkupplung KS, KL in deren Vorwärtsrichtung an. Falls das dritte Kupplungselement V geöffnet ist und das vierte Kupplungselement R geschlossen ist, treibt das Zahnrad Z6' über Z7' und über Z6" den Kupplungskorb der ersten Doppelkupplung KS, KL in der Rückwärtsrichtung an.

Das Zahnrad Z7 ist mit einer Welle gekoppelt, die ihrerseits mit dem zweiten Hydrostaten H2 gekoppelt ist. Der zweite Hydrostat H2 treibt folglich die Kupplungswelle und den Kupplungskorb Z7 der ersten Doppelkupplung an. Der Kupplungskorb Z7 führt somit die mechanische Leistung des ersten Planetengetriebes und die hydraulische Leistung des zweiten Hydrostat zusammen. Das erste Kupplungselement KL und das zweite Kupplungselement KS weisen den gleichen Kupplungskorb auf. Eine erstes Zahnrad Z15 wird vom ersten Kupplungselement angetrieben und weist eine erste Zahnanzahl auf. Ein zweites Zahnrad Z15' wird vom zweiten Kupplungselement KS angetrieben und weist eine zweite Zahnanzahl auf, wobei die zweite Zahnanzahl höher als die erste Zahnanzahl ist. Ein drittes Zahnrad Z14 kämmt mit dem ersten Zahnrad setzt 15 und weist eine dritte Zahnanzahl auf. Ein viertes Zahnrad Z14' kämmt mit dem zweiten Zahnrad Z15' und weist eine vierte Zahnanzahl auf, wobei die dritte Zahnanzahl kleiner als die vierte Zahnanzahl ist und wobei das dritte Zahnrad und das vierte Zahnrad an einer ersten Welle angeordnet sind. Ein fünftes Zahnrad setzt Z17 ist an der ersten Welle angeordnet und kämmt mit einer Fahrzeugantriebswelle. Eine Steuerungseinrichtung 112 ist dazu ausgebildet, den Winkel des ersten Hydrostat H1, den Winkel des zweiten Hydrostat H2, das erste Kupplungselement KL und das zweite Kupplungselement KS zu steuern.

Das Zahnrad Z17 treibt über ein Zahnrad Z16 ein zweites Planetengetriebe Z18, Z19, Z19' und Z20 an, das als Planetenlängsdifferential die Antriebsleistung auf die Vorderachse VA und Hinterachse HA verteilt. Das Differential kann mit einer Lamellenkupplung gesperrt werden. Der Aufbau und die Funktionsweise eines derartigen Getriebes sind einem Fachmann bekannt und müssen hierin nicht weiter erläutert werden.

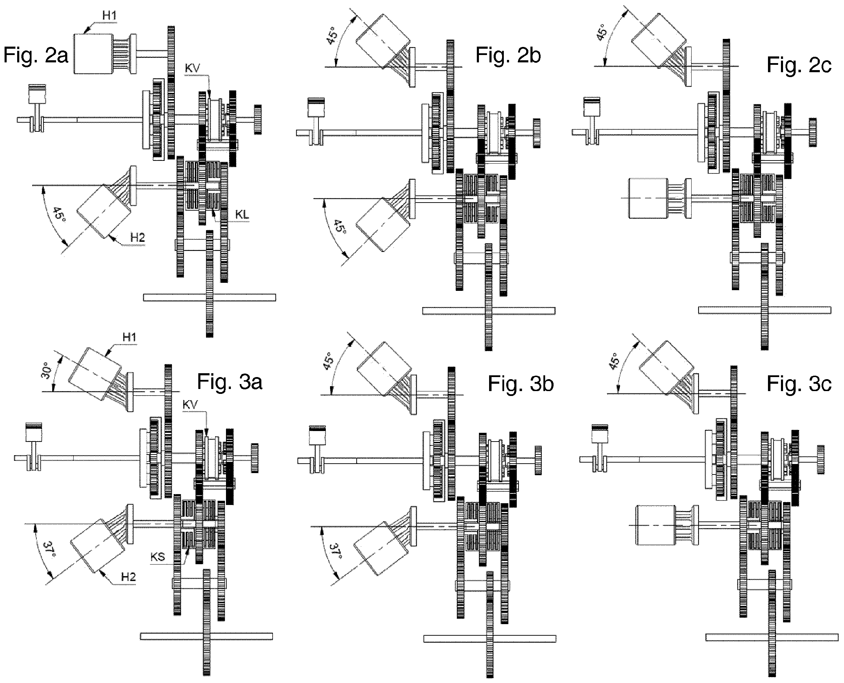

Es wird auf Figuren 2a bis 2c Bezug genommen, die die Stellung der Hydrostaten und der Kupplungselemente der beiden Doppelkupplung bei langsamer Vorwärtsfahrt zeigen. Die Steuerungseinrichtung 112 schließt das erste Kupplungselement KL und öffnet das zweite Kupplungselement KS der ersten Doppelkupplung und schließt das dritte Kupplungselement V und öffnet das vierte Kupplungselement R der zweiten Doppelkupplung. In diesem Fahrmodus schwenkt die Steuerungseinrichtung den ersten Hydrostat H1 in einem Bereich von 0° bis 45°, so dass er als Pumpe wirkt. Die Steuerungseinrichtung schwenkt den zweiten Hydrostat H2 von 45° bis 0°, so dass er als Motor wirkt. Falls eine niedrige Drehzahl auf die Fahrzeugantriebswelle VA, HA abgegeben werden soll, schwenkt die Steuerungseinrichtung den ersten Hydrostat auf 0° und den zweiten Hydrostat auf 45°. Falls eine hohe Drehzahl auf die Fahrzeugantriebswelle VA, HA abgegeben werden soll, schwenkt die Steuerungseinrichtung den ersten Hydrostat H1 auf 45° und den zweiten Hydrostat auf 0°.

Es wird auf Figuren 3a bis 3c Bezug genommen, die die Stellung des ersten Hydrostat H1, des zweiten Hydrostat H2 und die Stellung der Kupplungselementes der ersten Doppelkupplung und der zweiten Doppelkupplung in einem Fahrmodus mit einer schnellen Vorwärtsfahrt zeigen. Das zweite Kupplungselement KS der ersten Doppelkupplung wird durch die Steuerungseinrichtung 112 geschlossen und das erste Kupplungselement KL der ersten Doppelkupplung wird geöffnet. Das dritte Kupplungselement V der zweiten Doppelkupplung wird durch die Steuerungseinrichtung 112 geschlossen und das vierte Kupplungselement R der zweiten Doppelkupplung wird durch die Steuerungseinrichtung 112 geöffnet. Die Steuerungseinrichtung schwenkt den ersten Hydrostat H1 in einem Winkelbereich von 33° bis 35°, so dass er als Pumpe wirkt. Die Steuerungseinrichtung 112 schwenkt den zweiten Hydrostat H2 einem Winkelbereich von 39° bis 41°. Falls eine niedrige Drehzahl auf die Fahrzeugantriebswelle VA, HA abgegeben werden soll, schwenkt die Steuerungseinrichtung den ersten Hydrostat H1 auf einen Winkel von 34° und den zweiten Hydrostat auf einen Winkel von 40°. Falls eine hohe Drehzahl auf die Fahrzeugantriebswelle VA, HA abgegeben werden soll, schwenkt die Steuerungseinrichtung 112 den ersten Hydrostat H1 auf einen Winkel von 45° und den zweiten Hydrostat H2 auf einen Winkel von 0°.

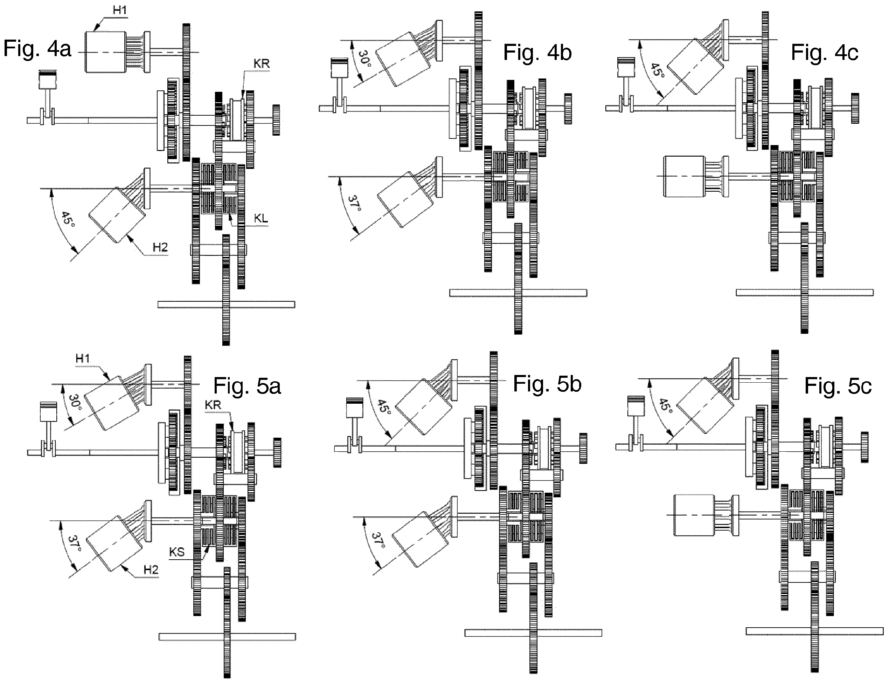

Es wird auf Figuren 4a bis 4c Bezug genommen, die die Stellung der Hydrostaten H1, H2, die Stellung der Kupplungselemente der ersten Doppelkupplung und der zweiten Doppelkupplung bei langsamer Rückwärtsfahrt zeigen. Die Steuerungseinrichtung 112 schließt das erste Kupplungselement KL der ersten Doppelkupplung und öffnet das zweite Kupplungselement KS der ersten Doppelkupplung. Ferner öffnet die Steuerungseinrichtung das dritte Kupplungselement V der zweiten Doppelkupplung und schließt das vierte Kupplungselement R der zweiten Doppelkupplung. Die Steuerungseinrichtung schwenkt in diesem Fahrmodus den ersten Hydrostat in einem Bereich von 0° bis - 45°, so dass er als Pumpe wirkt. Die Steuerungseinrichtung 112 schwenkt den zweiten Hydrostat von 45° bis 0°, so dass er als Motor wirkt. Falls eine niedrige Drehzahl auf die Fahrzeugantriebswelle VA, HA abgegeben werden soll, schwenkt die Steuerungseinrichtung den ersten Hydrostat auf 0° und den zweiten Hydrostat auf 45°. Falls eine hohe Drehzahl auf die Fahrzeugantriebswelle VA, HA abgegeben werden soll, schwenkt die Steuerungseinrichtung den ersten Hydrostat H1 auf -45° und den zweiten Hydrostat auf 0°.

Es wird auf Figuren 5a bis 5c Bezug genommen, die die Stellung der Hydrostaten H1, H2 und der Kupplungselementes der ersten Doppelkupplung und der zweiten Doppelkupplung bei schneller Rückwärtsfahrt zeigen. Die Steuerungseinrichtung öffnet das erste Kupplungselement KL der ersten Doppelkupplung und schließt das zweite Kupplungselement KS der zweiten Doppelkupplung. Ferner öffnet die Steuerungseinrichtung 112 das dritte Kupplungselement V der zweiten Doppelkupplung und schließt das vierte Kupplungselement R der zweiten Doppelkupplung. In diesen Fahrmodus schwenkt die Steuerungseinrichtung 112 den ersten Hydrostat H1 in einem Winkelbereich von -33° bis -35° und den zweiten Hydrostat in einem Winkel von 39° bis 41°. Der erste Hydrostat H1 arbeitet als Pumpe und der zweite Hydrostat H2 arbeitet als Motor. Falls eine niedrige Drehzahl auf die Getriebeantriebswelle VA, HA abgegeben werden soll wird der erste Hydrostat auf -34° und der zweite Hydrostat auf 40° geschwenkt. Falls eine hohe Drehzahl auf die Getriebeantriebswelle VA, HA abgegeben werden soll schwenkt die Steuerungseinrichtung 112 den ersten Hydrostat auf -45° und den zweiten Hydrostat auf 0°.

Bei dem in Figuren 3a bis 5c gezeigten Fahrmodus tritt keine Blindleistung auf. Es ist daher ein Vorteil des erfindungsgemäßen leistungsverzweigten Getriebes 100, dass es sehr energieeffizient arbeitet. Ein weiterer Vorteil des erfindungsgemäßen leistungsverzweigten Getriebes ist, dass ein breiter Geschwindigkeitsbereich in beiden Fahrtrichtungen abgedeckt werden kann.

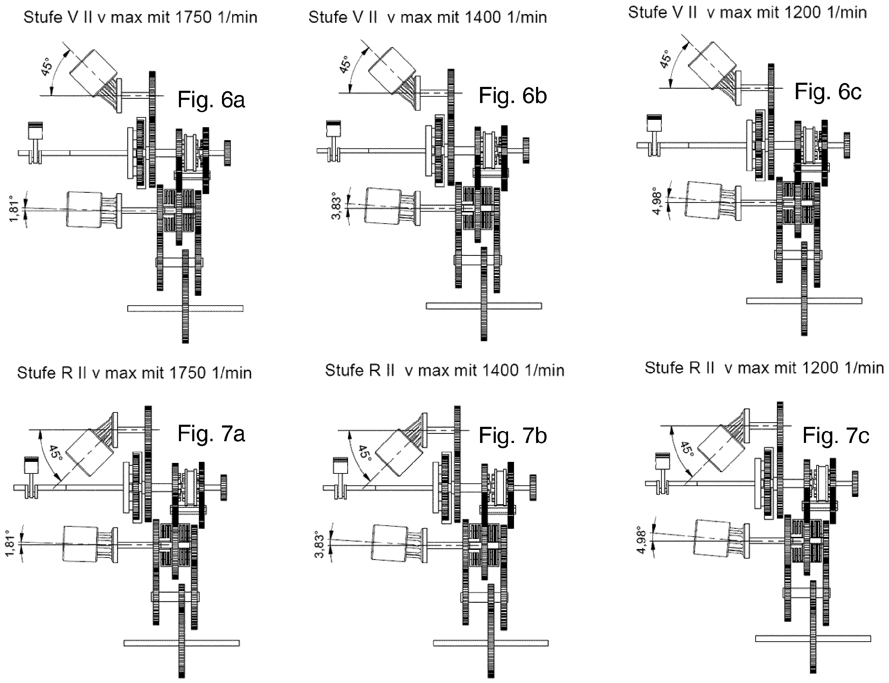

Es wird auf Figuren 6a bis 6c Bezug genommen, die die Stellung des ersten und zweiten Hydrostaten bei einer schnellen Vorwärtsfahrt bei reduzierter Drehzahl des Antriebsmotor darstellen. Das zweite Kupplungselement KS der ersten Doppelkupplung wird durch die Steuerungseinrichtung 112 geschlossen und das erste Kupplungselement KL der ersten Doppelkupplung wird geschlossen. Das dritte Kupplungselement V der zweiten Doppelkupplung wird durch die Steuerungseinrichtung 112 geschlossen und das vierte Kupplungselement R der zweiten Doppelkupplung wird durch die Steuerungseinrichtung 112 geöffnet. Beträgt die Drehzahl des Antriebsmotor bei Vorwärtsfahrt etwa 1750 1/min wird der zweite Hydrostat H2 auf einen Winkel von etwa -1,81° geschwenkt und der erste Hydrostat H1 in einem Winkelbereich von 0° bis 45° geschwenkt. Beträgt die Drehzahl des Antriebsmotor etwa 1400 1/min, wird der zweite Hydrostat H2 auf einen Winkel von etwa -3,83° geschwenkt und der erste Hydrostat einem Winkelbereich von 0 bis 45° geschwenkt. Beträgt die Drehzahl des Antriebsmotor etwa 1200 1/min wird der zweite Hydrostat H2 auf einen Winkel von -4,98° geschwenkt und der erste Hydrostat H1 in einem Winkelbereich von 0° bis 45° geschwenkt.

In diesem Fahrmodus kann die Betriebsdrehzahl der Antriebsmaschine etwa 50-60 % abgesenkt werden, wobei die Blindleistung etwa 60 % bis etwa 70 % betragen kann.

Es wird auf Figuren 7a bis 7c Bezug genommen, die eine schnelle Fahrt des Fahrzeuges in Rückwärtsfahrt bei reduzierter Drehzahl des Antriebsmotor zeigen. Das zweite Kupplungselement KS der ersten Doppelkupplung wird durch die Steuerungseinrichtung 112 geschlossen und das erste Kupplungselement KL der ersten Doppelkupplung wird geöffnet. Das dritte Kupplungselement V der zweiten Doppelkupplung wird durch die Steuerungseinrichtung 112 geöffnet und das vierte Kupplungselement R der zweiten Doppelkupplung wird durch die Steuerungseinrichtung 112 geschlossen. Beträgt die Drehzahl des Antriebsmotor bei Vorwärtsfahrt etwa 1750 1/min wird der zweite Hydrostat H2 auf einen Winkel von etwa -1,81° geschwenkt und der erste Hydrostat H1 in einem Winkelbereich von 0° bis -45° geschwenkt. Beträgt die Drehzahl des Antriebsmotor etwa 1400 1/min, wird der zweite Hydrostat H2 auf einen Winkel von etwa -3,83° geschwenkt und der erste Hydrostat einem Winkelbereich von 0 bis -45° geschwenkt. Beträgt die Drehzahl des Antriebsmotor etwa 1200 1/min wird der zweite Hydrostat H2 auf einen Winkel von - 4,98° geschwenkt und der erste Hydrostat H1 in einem Winkelbereich von 0° bis -45° geschwenkt.

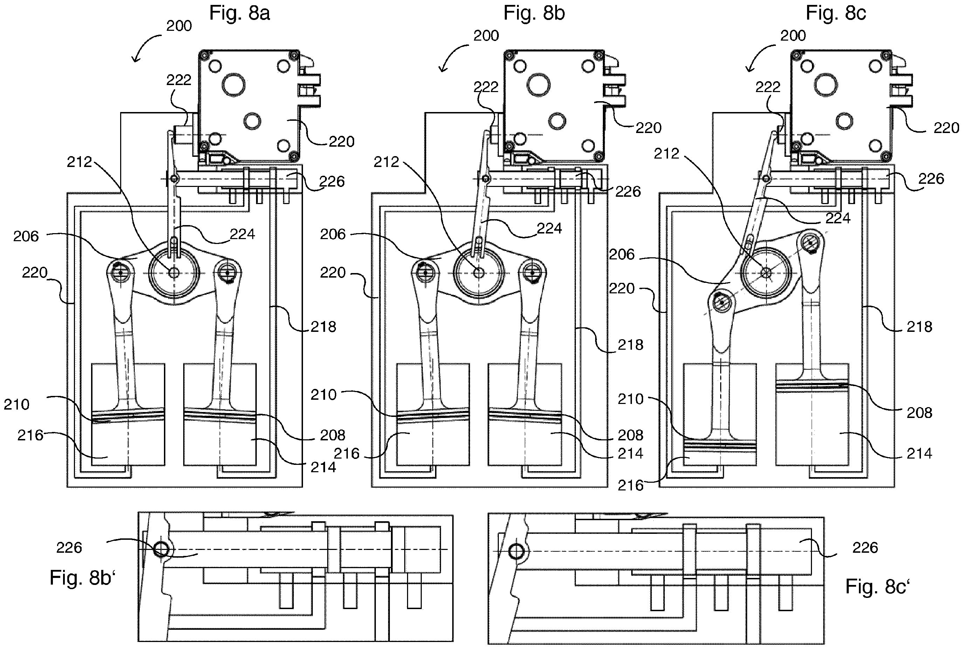

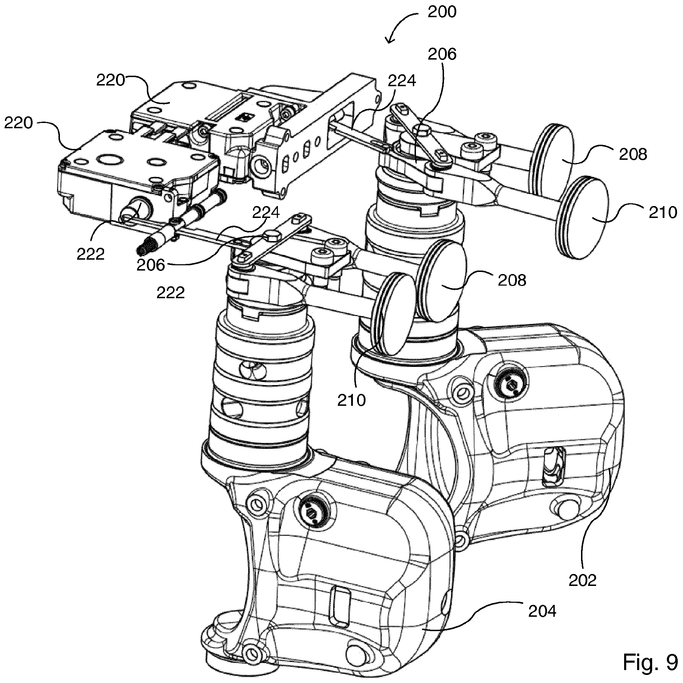

Es wird auf Figuren 8a bis 8c Bezug genommen, die schematische Schnittansicht einer erfindungsgemäßen Verstelleinrichtung 200 zeigen, und auf Figur 9 Bezug genommen, die eine teilweise weggeschnittene perspektivische Ansicht der erfindungsgemäßen Verstelleinrichtung zeigt. Die Verstelleinrichtung 200 umfasst eine Stelleinheit 220 mit einem Aktor 222, der longitudinal ausgelenkt wird, und zwar in Reaktion auf eine Anweisung der Steuerungseinrichtung. Am Aktor 222 ist ein Stellhebel drehbar gelagert, so dass, wenn das obere Ende des Stellhebels longitudinal durch den Aktor 222 ausgelenkt wird, der Stellhebels 224 seinen Winkel gegenüber der Verstelleinrichtung 200 ändert. Bei der in Figuren 8a bis 8c gezeigten Ausführungsform ist keine Lagerung vorgesehen, aber der Stellhebel 224 berührt den Aktor 222, so dass er sich gegenüber dem Aktor 222 schwenken kann, falls der Aktor 222 und der Stellhebel 224 in der Longitudinalrichtung verschoben wird.

An dem Stellhebel 224 ist ein Steuerschieber 226 schwenkbar angeordnet. Der Stellhebel 224 kann gegenüber dem Steuerschieber 226 durch das Verschieben des Aktors 222 geschwenkt werden kann und dadurch wird der Steuerschieber 226 in der Längsrichtung verschoben.

Der Stellhebel 224 ist drehbar an einem Schwenkhebel 206 angeordnet. Der Schwenkhebel 206 ist um einen Drehpunkt 212 drehbar gelagert. Der Schwenkhebel 206 ist mit dem Gehäuse 202, 204 eines Hydrostat H1, H2 gekoppelt, um das Gehäuse 202, 204 zu drehen.

Beabstandet vom Drehpunkt 212 des Schwenkhebels 206 ist ein erster Stellkolben 208 schwenkbar angeordnet, der sich in einem ersten Zylinder 214 befindet. Auf der anderen Seite des Schwenkhebels 206 ist ein zweiter Stellkolben 210 schwenkbar angeordnet, der sich in einem zweiten Zylinder 216 befindet. An dem ersten Zylinder 214 ist eine erste Hydraulikleitung angeschlossen, und an dem zweiten Zylinder 216 ist eine zweite Hydraulikleitung 220 angeschlossen. Durch den Steuerschieber 226 wird eingestellt, ob der erste Zylinder 214 oder der zweite Zylinder 216 mit Druck beaufschlagt werden. Durch die Druckbeaufschlagung auf den ersten Kolben 208 und/oder den zweiten Kolben 210 wird der Schwenkhebel 206 gedreht, wodurch das erste Gehäuse 202 bzw. das zweite Gehäuse 204 des Hydrostat H1, H2 gedreht wird.

Figur 8b' zeigt die die Stellung des Steuerschiebers 226 im Fall von Figur 8b. Hydraulikfluid kann vom zweiten Zylinder 216 in einen Tank strömen. Figur 8c' zeigt die die Stellung des Steuerschiebers 226 im Fall von Figur 8c. Die erste Hydraulikleitung 218 und die zweite Hydraulikleitung 220 sind durch den Steuerschieber 226 verschlossen.

Das erfindungsgemäße leistungsverzweigte Getriebe kann in einem breiten Geschwindigkeitsbereich in beiden Fahrtrichtungen arbeiten und erzeugt in diesem Bereich keine Blindleistung. Falls das Fahrzeug mit dem erfindungsgemäßen leistungsverzweigten Getriebe in Höchstgeschwindigkeit bei abgesenkter Drehzahl des Antriebsmotor bewegt werden soll, kann eine Blindleistung auftreten.

## Patentansprüche

1. Leistungsverzweigtes Getriebe, aufweisend:
- eine Getriebeantriebswelle, die mit einem Antriebsmotor gekoppelt werden kann,
- einem ersten Planetengetriebe, wobei die Getriebeantriebswelle mit den Achsen der Planetenräder (Z2) des ersten Planetengetriebes gekoppelt ist;
- einem ersten Hydrostat (H1), der vom Hohlrad (Z3) des ersten Planetengetriebes angetrieben wird;
- eine erste Doppelkupplung mit einem ersten Kupplungselement (KL) und einem zweiten Kupplungselement (KS), wobei das erste Kupplungselement (KL) und das zweite Kupplungselement (KS) den gleichen Kupplungskorb (Z7) aufweisen, wobei im Kupplungskorb (Z7) die mechanische Leistung des ersten Planetengetriebes und die hydraulische Leistung des zweiten Hydrostaten (H2) zusammengeführt werden;
- einem zweiten Hydrostat (H2), der mit dem ersten Hydrostat (H1) fluidmäßig verbunden ist, wobei der zweite Hydrostat (H2) mit einer Kupplungswelle und den Kupplungskorb (Z7) der ersten Doppelkupplung verbunden ist;
- ein erstes Zahnrad (Z15), das vom ersten Kupplungselement (KL) angetrieben wird und eine erste Zahnanzahl aufweist;
- ein zweites Zahnrad (Z15'), das vom zweiten Kupplungselement (KS) angetrieben wird und eine zweite Zahnanzahl aufweist, wobei die zweite Zahnanzahl höher als die erste Zahnanzahl ist;
- ein drittes Zahnrad (Z14), das mit dem ersten Zahnrad (Z15) kämmt und das eine dritte Zahnanzahl aufweist;
- ein viertes Zahnrad (Z14'), das mit dem zweiten Zahnrad (Z15') kämmt und das eine vierte Zahnanzahl aufweist, wobei die dritte Zahnanzahl kleiner als die vierte Zahnanzahl ist und wobei das dritte Zahnrad (Z14) und das vierte Zahnrad (Z14') an einer ersten Welle angeordnet sind;
- ein fünftes Zahnrad (Z17), das auf der ersten Welle angeordnet ist, wobei das fünfte Zahnrad eine Fahrzeugantriebswelle (VA, HA) antreibt;
- einer Steuerungseinrichtung, die dazu ausgebildet ist, den ersten Hydrostat (H1), den zweiten Hydrostat (H2), das erste Kupplungselement (KL) und das zweite Kupplungselement (KS) zu steuern.

2. Leistungsverzweigtes Getriebe nach Anspruch 1, wobei die Steuerungseinrichtung in einem ersten Fahrmodus dazu ausgebildet ist, den ersten Hydrostat (H1) in einem Bereich von 0° bis 45° zu schwenken, so dass er als Pumpe wirkt, und den zweiten Hydrostat (H2) von 45° bis 0° zu schwenken, so dass er als Motor wirkt, und das erste Kupplungselement (KL) zu schließen und das zweite Kupplungselement (KS) zu öffnen, und falls eine niedrige Drehzahl auf die Fahrzeugantriebswelle (VA, HA) abgegeben werden soll, die Steuerungseinrichtung dazu ausgebildet ist, den ersten Hydrostat auf 0° zu schwenken und den zweiten Hydrostat auf 45° zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf 45° zu schwenken und den zweiten Hydrostat (H2) auf 0° zu schwenken.

3. Leistungsverzweigtes Getriebe nach Anspruch 1 oder 2, wobei die Steuerungseinrichtung in einem zweiten Fahrmodus dazu ausgebildet ist, den ersten Hydrostat (H1) in einem Bereich von einem ersten Zwischenwert, der höher als 33° und niedriger als 35° ist bis 45° zu schwenken, so dass er als Pumpe wirkt, und den zweiten Hydrostat (H2) von einem zweiten Zwischenwert der höher als 39° und niedriger als 41° ist, bis 0° zu schwenken, so dass er als Motor wirkt, und das erste Kupplungselement (KL) zu öffnen und das zweite Kupplungselement (KL) zu schließen, und falls eine niedrige Drehzahl auf die Fahrzeugantriebswelle (VA, HA) abgegeben werden soll, die Steuerungseinrichtung dazu ausgebildet ist, den ersten Hydrostat (H1) auf den ersten Zwischenwert zu schwenken und den zweiten Hydrostat auf den zweiten Zwischenwert zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf 45° zu schwenken und den zweiten Hydrostat (H2) auf 0° zu schwenken.

4. Leistungsverzweigtes Getriebe nach Anspruch 3, wobei die Steuerungseinrichtung in einem dritten Fahrmodus dazu ausgebildet ist, den zweiten Hydrostat (H2) auf einen dritten Zwischenwert zu schwenken, der zwischen 0° und -8° liegt.

5. Leistungsverzweigtes Getriebe nach Anspruch 3 oder 4, wobei die Steuerungseinrichtung beim Umschalten vom ersten Fahrmodus zum zweiten Fahrmodus dazu ausgebildet ist,
- den ersten Hydrostat (H1) auf einen Bereich von etwa 33° bis etwa 35°zu schwenken;
- den zweiten Hydrostat (H2) auf einen Bereich von etwa 39° bis 41° zu schwenken;
- anschließend das zweite Kupplungselement (KS) zu schließen und das erste Kupplungselement (KL) zu öffnen; und
- anschließend den ersten Hydrostat (H1) auf 45° und den zweiten Hydrostat (H2) auf 0° zu schwenken.

6. Leistungsverzweigtes Getriebe nach einem der Ansprüche 1 bis 5, wobei die Steuerungseinrichtung dazu ausgebildet ist, um kein Drehmoment an die Fahrzeugantriebswelle zu übertragen,
- den ersten Hydrostat auf 0° zu schwenken,
- den zweiten Hydrostat auf 45° zu schwenken und
- das erste Kupplungselement zu schließen.

7. Leistungsverzweigtes Getriebe nach einem der Ansprüche 1 bis 4, ferner aufweisend ein Reversiergetriebe (V, R) das vom Sonnenrad (Z1) des ersten Planetengetriebes angetrieben wird und das den Kupplungskorb (Z7) der ersten Doppelkupplung antreibt.

8. Leistungsverzweigtes Getriebe nach Anspruch 6, wobei das Reversiergetriebe (V, R) zweite Doppelkupplung mit einem dritten Kupplungselement (V) und einem vierten Kupplungselement (R) aufweist, wobei das Reversiergetriebe (V, R) in einer geschlossenen Stellung des dritten Kupplungselementes (V) und in einer offenen Stellung des vierten Kupplungselements (R) den Kupplungskorb in einer ersten Richtung antreibt und in einer offenen Stellung des dritten Kupplungselementes (V) und in der geschlossenen Stellung des vierten Kupplungselements (R) den Kupplungskorb in einer zweite Richtung antreibt, und wobei die Steuerungseinrichtung dazu ausgebildet ist, das dritte Kupplungselement (V) und das vierte Kupplungselement (R) zu steuern.

9. Leistungsverzweigtes Getriebe nach Anspruch 8, wobei die Steuerungseinrichtung dazu ausgebildet ist, das dritte Kupplungselement (V) zu schließen und das vierte Kupplungselement zu öffnen.

10. Leistungsverzweigtes Getriebe nach Anspruch 8 oder 9, wobei die Steuerungseinrichtung in einem ersten Fahrmodus dazu ausgebildet ist, den ersten Hydrostat (H1) in einem Bereich von 0° bis -45° zu schwenken, so dass er als Pumpe wirkt, und den zweiten Hydrostat (H2) von 45° bis 0° zu schwenken, so dass er als Motor wirkt, und das erste Kupplungselement (KL) zu schließen, das zweite Kupplungselement (KS) zu öffnen, das dritte Kupplungselement (V) zu schließen und das dritte Kupplungselement (R) zu öffnen, und falls eine niedrige Drehzahl auf die Fahrzeugantriebswelle (VA, HA) abgegeben werden soll, die Steuerungseinrichtung dazu ausgebildet ist, den ersten Hydrostat (H1) auf 0° zu schwenken und den zweiten Hydrostat (H2) auf 45° zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf - 45° zu schwenken und den zweiten Hydrostat (H2) auf 0° zu schwenken.

11. Leistungsverzweigtes Getriebe nach einem der Ansprüche 8, 9 oder 10, wobei die Steuerungseinrichtung in einem zweiten Fahrmodus dazu ausgebildet ist, den ersten Hydrostat (H1) in einem Bereich von einem dritten Zwischenwert, der höher als -35° und niedriger als -33° ist, bis -45° zu schwenken, so dass er als Pumpe wirkt, und den zweiten Hydrostat (H2) von einem vierten Zwischenwert, der niedriger als -39° und höher als -41° ist, bis 0° zu schwenken, so dass er als Motor wirkt, und, das erste Kupplungselement (KS) zu öffnen, das zweite Kupplungselement (KL) zu schließen, das dritte Kupplungselement (V) zu schließen und das vierte Kupplungselement (R) zu öffnen, und falls eine niedrige Drehzahl auf die Fahrzeugantriebswelle (VA, HA) abgegeben werden soll, die Steuerungseinrichtung dazu ausgebildet ist, den ersten Hydrostat (H1) auf den dritten Zwischenwert zu schwenken und den zweiten Hydrostat auf den vierten Zwischenwert zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf -45° zu schwenken und den zweiten Hydrostat (H2) auf 0° zu schwenken.

12. Leistungsverzweigtes Getriebe nach einem der Ansprüche 1 bis 11, ferner aufweisend eine Verstelleinrichtung (200), die dazu ausgebildet ist, ein Gehäuse (202) des erste Hydrostat (H1) oder ein Gehäuse (204) des zweiten Hydrostat (H2) zu drehen, wobei die Verstelleinrichtung (200) aufweist:
- einen drehbar gelagerten Schwenkhebel (206), der mit dem Gehäuse (202) des ersten Hydrostat (H1) oder mit dem Gehäuse (204) des zweiten Hydrostat (H2) gekoppelt ist und der dazu ausgebildet ist, das Gehäuse des erste Hydrostaten (H1) oder das Gehäuse des zweiten Hydrostat (H2) um einen Drehpunkt (212) des Schwenkhebels (202) zu drehen;
- einen ersten Stellkolben (208), der an einer ersten Seite des Schwenkhebels (202) drehbar gelagert ist,
- einen zweiten Stellkolben (210), der an einer zweiten Seite des Schwenkhebels (202) drehbar gelagert ist, wobei die zweite Seite der ersten Seite entgegengesetzt ist und wobei zwischen der ersten Seite und der zweiten Seite des Schwenkhebels (202) der Drehpunkt (212) des Schwenkhebel (206) angeordnet ist;
- einen ersten Zylinder (214), in dem der erste Stellkolben (208) angeordnet ist;
- einen zweiten Zylinder (216), in dem der zweite Stellkolben (210) angeordnet ist;
- eine erste Hydraulikleitung (218), die mit dem ersten Zylinder (214) gekoppelt ist, um Hydrauliköl dem ersten Zylinder (208) zuzuführen oder von dort abzuführen;
- eine zweite Hydraulikleitung (220), die mit dem zweiten Zylinder (216) gekoppelt ist, um Hydrauliköl dem zweiten Zylinder (210) zuzuführen oder von dort abzuführen; und
- eine Stelleinheit (220) mit einem Aktor (222), wobei die Steuerungseinrichtung dazu ausgebildet ist, den Aktor (222) so zu betätigen, dass der Aktor (222) bewirkt, dass Hydrauliköl der ersten Hydraulikleitung (218) und/oder der zweiten Hydraulikleitung (220) zugeführt wird oder von dort abgeführt wird.

13. Leistungsverzweigtes Getriebe nach Anspruch 12, wobei die Verstelleinrichtung (200) ferner aufweist:
- einen Stellhebel (224), der am Aktor (222) drehbar gelagert ist; und
- einen Steuerschieber (226), der am Stellhebel (224) drehbar gelagert ist, wobei der Steuerschieber (226) dazu ausgebildet ist, die erste Hydraulikleitung (218) und/oder die zweite Hydraulikleitung (220) zu öffnen oder zu schließen, damit Hydrauliköl in die erste Hydraulikleitung (218) und/oder die zweite Hydraulikleitung (220) geleitet werden kann oder von dort abgeführt werden kann;
- wobei der Stellhebel (224) am Schwenkhebel (206) drehbar gelagert ist.

14. Leistungsverzweigtes Getriebe nach Anspruch 13, wobei
- in der 0°-Stellung des Schwenkhebels (206), in der der erste Stellkolben (208) und der zweite Stellkolben (210) gleich weit ausgelenkt sind, sich eine Lagerung des Stellhebels (224), oberhalb des Drehpunktes des Stellhebels (206) befindet;
- die Lagerung des ersten Stellkolbens (208) am Stellhebel (206) und die Lagerung des zweiten Stellkolbens (210) am Stellhebel (206) symmetrisch zum Drehpunkt (206) des Stellhebels (206) angeordnet sind; und
- wobei der Aktor (222) durch die Stelleinrichtung (220) longitudinal bewegt wird.

15. Fahrzeug mit einer Antriebsmaschine, die mit dem leistungsverzweigten Getriebe nach einem der Ansprüche 1 bis 14, das mit der Antriebsmaschine gekoppelt ist.

## Geänderte Patentansprüche

### Geänderte Patentansprüche gemäss Regel 137(2) EPÜ.

1. Leistungsverzweigtes Getriebe, aufweisend:
- eine Getriebeantriebswelle, die mit einem Antriebsmotor gekoppelt werden kann,
- ein erstes Planetengetriebe, wobei die Getriebeantriebswelle mit den Achsen der Planetenräder (Z2) des ersten Planetengetriebes gekoppelt ist;
- einen ersten Hydrostat (H1), der vom Hohlrad (Z3) des ersten Planetengetriebes angetrieben wird;
- einen zweiten Hydrostat (H2), der mit dem ersten Hydrostat (H1) fluidmäßig verbunden ist;
- eine erste Doppelkupplung mit einem ersten Kupplungselement (KL) und einem zweiten Kupplungselement (KS), wobei das erste Kupplungselement (KL) und das zweite Kupplungselement (KS) den gleichen Kupplungskorb (Z7) aufweisen, wobei im Kupplungskorb (Z7) die mechanische Leistung des ersten Planetengetriebes und die hydraulische Leistung des zweiten Hydrostaten (H2) zusammengeführt werden, wobei der Kupplungskorb (Z7) der ersten Doppelkupplung von dem Sonnenrad des ersten Planetengetriebes angetrieben wird und wobei der zweite Hydrostat (H2) mit einer Kupplungswelle und dem Kupplungskorb (Z7) der ersten Doppelkupplung verbunden ist;
- ein erstes Zahnrad (Z15), das vom ersten Kupplungselement (KL) angetrieben wird und eine erste Zahnanzahl aufweist;
- ein zweites Zahnrad (Z15`), das vom zweiten Kupplungselement (KS) angetrieben wird und eine zweite Zahnanzahl aufweist, wobei die zweite Zahnanzahl höher als die erste Zahnanzahl ist;
- ein drittes Zahnrad (Z14), das mit dem ersten Zahnrad (Z15) kämmt und das eine dritte Zahnanzahl aufweist;
- ein viertes Zahnrad (Z14`), das mit dem zweiten Zahnrad (Z15') kämmt und das eine vierte Zahnanzahl aufweist, wobei die dritte Zahnanzahl kleiner als die vierte Zahnanzahl ist und wobei das dritte Zahnrad (Z14) und das vierte Zahnrad (Z14') an einer ersten Welle angeordnet sind;
- ein fünftes Zahnrad (Z17), das auf der ersten Welle angeordnet ist, wobei das fünfte Zahnrad eine Fahrzeugantriebswelle (VA, HA) antreibt;
- eine Steuerungseinrichtung, die dazu ausgebildet ist, den ersten Hydrostat (H1), den zweiten Hydrostat (H2), das erste Kupplungselement (KL) und das zweite Kupplungselement (KS) zu steuern.

2. Leistungsverzweigtes Getriebe nach Anspruch 1, wobei die Steuerungseinrichtung in einem ersten Fahrmodus dazu ausgebildet ist, den ersten Hydrostat (H1) in einem Bereich von 0° bis 45° zu schwenken, so dass er als Pumpe wirkt, und den zweiten Hydrostat (H2) von 45° bis 0° zu schwenken, so dass er als Motor wirkt, und das erste Kupplungselement (KL) zu schließen und das zweite Kupplungselement (KS) zu öffnen, und falls eine niedrige Drehzahl auf die Fahrzeugantriebswelle (VA, HA) abgegeben werden soll, die Steuerungseinrichtung dazu ausgebildet ist, den ersten Hydrostat auf 0° zu schwenken und den zweiten Hydrostat auf 45° zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf 45° zu schwenken und den zweiten Hydrostat (H2) auf 0° zu schwenken.

3. Leistungsverzweigtes Getriebe nach Anspruch 1 oder 2, wobei die Steuerungseinrichtung in einem zweiten Fahrmodus dazu ausgebildet ist, den ersten Hydrostat (H1) in einem Bereich von einem ersten Zwischenwert, der höher als 33° und niedriger als 35° ist bis 45° zu schwenken, so dass er als Pumpe wirkt, und den zweiten Hydrostat (H2) von einem zweiten Zwischenwert der höher als 39° und niedriger als 41° ist, bis 0° zu schwenken, so dass er als Motor wirkt, und das erste Kupplungselement (KL) zu öffnen und das zweite Kupplungselement (KL) zu schließen, und falls eine niedrige Drehzahl auf die Fahrzeugantriebswelle (VA, HA) abgegeben werden soll, die Steuerungseinrichtung dazu ausgebildet ist, den ersten Hydrostat (H1) auf den ersten Zwischenwert zu schwenken und den zweiten Hydrostat auf den zweiten Zwischenwert zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf 45° zu schwenken und den zweiten Hydrostat (H2) auf 0° zu schwenken.

4. Leistungsverzweigtes Getriebe nach Anspruch 3, wobei die Steuerungseinrichtung in einem dritten Fahrmodus dazu ausgebildet ist, den zweiten Hydrostat (H2) auf einen dritten Zwischenwert zu schwenken, der zwischen 0° und -8° liegt.

5. Leistungsverzweigtes Getriebe nach Anspruch 3 oder 4, sofern er von Anspruch 2 abhängt, wobei die Steuerungseinrichtung beim Umschalten vom ersten Fahrmodus zum zweiten Fahrmodus dazu ausgebildet ist,
- den ersten Hydrostat (H1) auf einen Bereich von etwa 33° bis etwa 35°zu schwenken;
- den zweiten Hydrostat (H2) auf einen Bereich von etwa 39° bis 41° zu schwenken;
- anschließend das zweite Kupplungselement (KS) zu schließen und das erste Kupplungselement (KL) zu öffnen; und
- anschließend den ersten Hydrostat (H1) auf 45° und den zweiten Hydrostat (H2) auf 0° zu schwenken.

6. Leistungsverzweigtes Getriebe nach einem der Ansprüche 1 bis 5, wobei die Steuerungseinrichtung dazu ausgebildet ist, um kein Drehmoment an die Fahrzeugantriebswelle zu übertragen,
- den ersten Hydrostat auf 0° zu schwenken,
- den zweiten Hydrostat auf 45° zu schwenken und
- das erste Kupplungselement zu schließen.

7. Leistungsverzweigtes Getriebe nach einem der Ansprüche 1 bis 4, ferner aufweisend ein Reversiergetriebe (V, R) das vom Sonnenrad (Z1) des ersten Planetengetriebes angetrieben wird und das den Kupplungskorb (Z7) der ersten Doppelkupplung antreibt.

8. Leistungsverzweigtes Getriebe nach Anspruch 6, wobei das Reversiergetriebe (V, R) zweite Doppelkupplung mit einem dritten Kupplungselement (V) und einem vierten Kupplungselement (R) aufweist, wobei das Reversiergetriebe (V, R) in einer geschlossenen Stellung des dritten Kupplungselementes (V) und in einer offenen Stellung des vierten Kupplungselements (R) den Kupplungskorb in einer ersten Richtung antreibt und in einer offenen Stellung des dritten Kupplungselementes (V) und in der geschlossenen Stellung des vierten Kupplungselements (R) den Kupplungskorb in einer zweite Richtung antreibt, und wobei die Steuerungseinrichtung dazu ausgebildet ist, das dritte Kupplungselement (V) und das vierte Kupplungselement (R) zu steuern.

9. Leistungsverzweigtes Getriebe nach Anspruch 8, wobei die Steuerungseinrichtung dazu ausgebildet ist, das dritte Kupplungselement (V) zu schließen und das vierte Kupplungselement zu öffnen.

10. Leistungsverzweigtes Getriebe nach Anspruch 8 oder 9, wobei die Steuerungseinrichtung in dem ersten Fahrmodus dazu ausgebildet ist, den ersten Hydrostat (H1) in einem Bereich von 0° bis -45° zu schwenken, so dass er als Pumpe wirkt, und den zweiten Hydrostat (H2) von 45° bis 0° zu schwenken, so dass er als Motor wirkt, und das erste Kupplungselement (KL) zu schließen, das zweite Kupplungselement (KS) zu öffnen, das dritte Kupplungselement (V) zu schließen und das dritte Kupplungselement (R) zu öffnen, und falls eine niedrige Drehzahl auf die Fahrzeugantriebswelle (VA, HA) abgegeben werden soll, die Steuerungseinrichtung dazu ausgebildet ist, den ersten Hydrostat (H1) auf 0° zu schwenken und den zweiten Hydrostat (H2) auf 45° zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf - 45° zu schwenken und den zweiten Hydrostat (H2) auf 0° zu schwenken.

11. Leistungsverzweigtes Getriebe nach einem der Ansprüche 8, 9 oder 10, sofern er vom Anspruch 2 abhängt, wobei die Steuerungseinrichtung in dem zweiten Fahrmodus dazu ausgebildet ist, den ersten Hydrostat (H1) in einem Bereich von einem dritten Zwischenwert, der höher als -35° und niedriger als - 33° ist, bis -45° zu schwenken, so dass er als Pumpe wirkt, und den zweiten Hydrostat (H2) von einem vierten Zwischenwert, der niedriger als -39° und höher als -41° ist, bis 0° zu schwenken, so dass er als Motor wirkt, und, das erste Kupplungselement (KS) zu öffnen, das zweite Kupplungselement (KL) zu schließen, das dritte Kupplungselement (V) zu schließen und das vierte Kupplungselement (R) zu öffnen, und falls eine niedrige Drehzahl auf die Fahrzeugantriebswelle (VA, HA) abgegeben werden soll, die Steuerungseinrichtung dazu ausgebildet ist, den ersten Hydrostat (H1) auf den dritten Zwischenwert zu schwenken und den zweiten Hydrostat auf den vierten Zwischenwert zu schwenken, und falls eine hohe Drehzahl auf die Fahrzeugantriebswelle (VA, HA) abgegeben werden soll, die Steuerungseinrichtung dazu ausgebildet ist, den ersten Hydrostat (H1) auf - 45° zu schwenken und den zweiten Hydrostat (H2) auf 0° zu schwenken.

12. Leistungsverzweigtes Getriebe nach einem der Ansprüche 1 bis 11, ferner aufweisend eine Verstelleinrichtung (200), die dazu ausgebildet ist, ein Gehäuse (202) des erste Hydrostat (H1) oder ein Gehäuse (204) des zweiten Hydrostat (H2) zu drehen, wobei die Verstelleinrichtung (200) aufweist:
- einen drehbar gelagerten Schwenkhebel (206), der mit dem Gehäuse (202) des ersten Hydrostat (H1) oder mit dem Gehäuse (204) des zweiten Hydrostat (H2) gekoppelt ist und der dazu ausgebildet ist, das Gehäuse des erste Hydrostaten (H1) oder das Gehäuse des zweiten Hydrostat (H2) um einen Drehpunkt (212) des Schwenkhebels (202) zu drehen;
- einen ersten Stellkolben (208), der an einer ersten Seite des Schwenkhebels (202) drehbar gelagert ist,
- einen zweiten Stellkolben (210), der an einer zweiten Seite des Schwenkhebels (202) drehbar gelagert ist, wobei die zweite Seite der ersten Seite entgegengesetzt ist und wobei zwischen der ersten Seite und der zweiten Seite des Schwenkhebels (202) der Drehpunkt (212) des Schwenkhebel (206) angeordnet ist;
- einen ersten Zylinder (214), in dem der erste Stellkolben (208) angeordnet ist;
- einen zweiten Zylinder (216), in dem der zweite Stellkolben (210) angeordnet ist;
- eine erste Hydraulikleitung (218), die mit dem ersten Zylinder (214) gekoppelt ist, um Hydrauliköl dem ersten Zylinder (208) zuzuführen oder von dort abzuführen;
- eine zweite Hydraulikleitung (220), die mit dem zweiten Zylinder (216) gekoppelt ist, um Hydrauliköl dem zweiten Zylinder (210) zuzuführen oder von dort abzuführen; und
- eine Stelleinheit (220) mit einem Aktor (222), wobei die Steuerungseinrichtung dazu ausgebildet ist, den Aktor (222) so zu betätigen, dass der Aktor (222) bewirkt, dass Hydrauliköl der ersten Hydraulikleitung (218) und/oder der zweiten Hydraulikleitung (220) zugeführt wird oder von dort abgeführt wird.

13. Leistungsverzweigtes Getriebe nach Anspruch 12, wobei die Verstelleinrichtung (200) ferner aufweist:
- einen Stellhebel (224), der am Aktor (222) drehbar gelagert ist; und
- einen Steuerschieber (226), der am Stellhebel (224) drehbar gelagert ist, wobei der Steuerschieber (226) dazu ausgebildet ist, die erste Hydraulikleitung (218) und/oder die zweite Hydraulikleitung (220) zu öffnen oder zu schließen, damit Hydrauliköl in die erste Hydraulikleitung (218) und/oder die zweite Hydraulikleitung (220) geleitet werden kann oder von dort abgeführt werden kann;
- wobei der Stellhebel (224) am Schwenkhebel (206) drehbar gelagert ist.

14. Leistungsverzweigtes Getriebe nach Anspruch 13, wobei
- in der 0°-Stellung des Schwenkhebels (206), in der der erste Stellkolben (208) und der zweite Stellkolben (210) gleich weit ausgelenkt sind, sich eine Lagerung des Stellhebels (224), oberhalb des Drehpunktes des Stellhebels (206) befindet;
- die Lagerung des ersten Stellkolbens (208) am Stellhebel (206) und die Lagerung des zweiten Stellkolbens (210) am Stellhebel (206) symmetrisch zum Drehpunkt (206) des Stellhebels (206) angeordnet sind; und
- wobei der Aktor (222) durch die Stelleinrichtung (220) longitudinal bewegt wird.

15. Fahrzeug mit
- einer Antriebsmaschine; und
- einem leistungsverzweigten Getriebe nach einem der Ansprüche 1 bis 14, das mit der Antriebsmaschine gekoppelt ist.
